(19) Europäisches Patentamt
European Patent Office
Office européen des brevets

(11) Veröffentlichungsnummer: **0 214 930 B1**

(12) **EUROPÄISCHE PATENTSCHRIFT**

(45) Veröffentlichungstag der Patentschrift: **06.03.91**

(51) Int. Cl.⁵: **B29C 37/00**, C08F 2/48, C08J 5/00, C08G 59/16, C08G 8/32, C08G 59/40, C08F 299/02, C08J 5/04

(21) Anmeldenummer: **86810343.3**

(22) Anmeldetag: **01.08.86**

(54) **Geformte Verbundstoffe.**

(30) Priorität: **07.08.85 GB 8519778**

(43) Veröffentlichungstag der Anmeldung:
**18.03.87 Patentblatt 87/12**

(45) Bekanntmachung des Hinweises auf die Patenterteilung:
**06.03.91 Patentblatt 91/10**

(84) Benannte Vertragsstaaten:
**BE CH DE FR GB IT LI NL SE**

(56) Entgegenhaltungen:
**EP-A- 0 105 839**
**DE-A- 3 140 316**
**GB-A- 1 570 991**
**US-A- 4 203 792**

**CHEMICAL ABSTRACTS, Band 100, Nr. 22, 28. Mai 1984, Zusammenfassung Nr. 175954z, Columbus, Ohio, US; & JP-A-59 6226 (SUMITOMO BAKELITE CO., LTD) 13-01-1984**

(73) Patentinhaber: **CIBA-GEIGY AG**
**Klybeckstrasse 141**
**CH-4002 Basel(CH)**

(72) Erfinder: **Irving, Edward, Dr.**
**41, Swaffham Road**
**Burwell Cambridge CB5 0AN(GB)**
Erfinder: **Smith, Terence James**
**6A Dickasons Melbourn**
**Royston Hertfordshire SG8 6EL(GB)**

**EP 0 214 930 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Vorliegende Erfindung betrifft ein Verfahren zur Herstellung von beschichteten, verstärkten Epoxid- und Phenolharzformkörpern.

Geformte verstärkte Verbundstoffe werden üblicherweise dadurch hergestellt, dass man Schichten eines Harzes und dessen Härters, vorzugsweise eines Polyesterharzes und eines Peroxidhärters, und einer Verstärkung, die ein Pulver, Flocken oder vorzugsweise eine Faser, zweckmässig Glasfaser, darstellt, in ein geeignetes Werkzeug einbringt, das Harz härten lässt und den entstandenen gehärteten Verbundstoff entnimmt. Die Oberflächen solcher Formkörper weisen häufig Fehlstellen auf, wo die Verstärkung einen Teil der Oberfläche bildet. Um solche Fehlstellen zu verhindern und so eine einwandfrei glatte Oberfläche zu erhalten, ist es in der Praxis üblich, eine Schicht des Harzes ohne Verstärkung auf die Werkzeugoberfläche aufzubringen und dieses Harz sich verfestigen (gelieren) zu lassen, bevor der Rest des Harzes mit der Verstärkung aufgebracht wird. Diese Methode zur Erzeugung einer fehlerfreien Oberfläche auf den Verbundstoff wird als Gel-Beschichtung bezeichnet.

Die mechanischen Eigenschaften auf diese Weise hergestellter, geformter Verbundstoffe sind beschränkt, da man ein bei Raumtemperatur rasch härtendes Harz verwenden muss. Sind bessere mechanische Eigenschaften erforderlich, so kann man ein Phenol- oder Epoxidharz einsetzen. Diese Harze härten nur langsam, wenn sie mit einem Härter vermischt und bei Raumtemperatur belassen werden, und es ist deshalb in der Praxis ublich, das Harz im Werkzeug zu erhitzen und somit Härtung innerhalb weniger Minuten zu erzielen. Es ist natürlich möglich, eine bei Raumtemperatur rasch härtende Gel-Beschichtung, beispielsweise ein Polyesterharz, aufzutragen und nach erfolgter Gelierung das Phenol- oder Epoxidharz zusammen mit der Verstärkung aufzubringen. Eine solche Methode ist wegen der chemischen Verschiedenheit zwischen der Beschichtung und dem Kern des Formkörpers mit Nachteilen behaftet. Bei physikalischen oder mechanischen Stössen neigt die Beschichtung zur Rissbildung oder sogar Trennung vom Formkörperkern. Es wird deshalb weithin vorgezogen, eine heisshärtbare Phenol- bzw. Epoxidharzgelbeschichtung zu verwenden, wenn der Kern des Formkörpers aus einem Phenol- bzw. Epoxidharz besteht.

Der Einbau solcher mechanisch widerstandsfähiger Gelbeschichtungen bereitet nun seine eigenen Schwierigkeiten. Nach dem Auftragen des Beschichtungsharzes auf das Werkzeug ist Erhitzen erforderlich, um Gelierung zu erzielen, da die Verstärkung und weiteres Harz nicht aufgebracht werden können, bis die Gelbeschichtung gehärtet ist, da sonst die Verstärkung in die Beschichtung eindringen und die fertige Oberfläche beschädigen würde. Um eine Gelbeschichtung zweckmässiger Dicke zu erhalten, bringt man üblicherweise eine Thixotropie verleihende Zusätze enthaltende Formulierung auf. Zahlreiche solche Zusätze verursachen jedoch ein Fliessen thixotroper Zusammensetzungen beim Erhitzen, und dies führt wiederum zu Stellen, wo die Gelbe schichtung dicker bzw. dünner als erwünscht ist. Die Formulierung heisshärtbarer Gelbeschichtungen ist problematisch, da sie genaue Kenntnisse der Anwendungsbedingungen, Härtungsbedingungen und sogar der Werkzeuggestalt voraussetzt.

Es besteht eine weitere Schwierigkeit, die bei der Verarbeitung einer heissgehärteten Gelbeschichtung zu überwinden ist. Die Beschichtung und das Werkzeug, auf welches sie aufgebracht wird, müssen eine genügend lange Zeit erhitzt werden, um Gelierung des Harzes zu erreichen. Dann müssen sie abgekühlt werden, bevor die Harz- und Verstär-kungsschichten aufgebracht werden, da sonst eine gewisse vorzeitige Gelierung dieses Harzes eintreten kann. Nach beendeter Auflegung wird der ganze Aufbau nochmals erhitzt. Solch ein Verfahren ist nicht nur teuer wegen der Kosten zum Erhitzen der oft grossen Metallwerkzeuge, sondern die Aufheiz-Abkühl-Aufheizfolge ist auch sehr zeitraubend, wodurch die Kosten pro Formkörper ansteigen. Es besteht deshalb ein Bedarf nach einer Methode zur Herstellung mechanisch fester, gel-beschichteter Verbundstoffe, bei denen die Beschichtung fest an den verstärkten Kern des Formkörpers gebunden ist, und die kein doppeltes Erhitzen des Werkzeugs und Harzes erfordern.

Es wurde nun gefunden, dass sich diese Aufgabe dadurch lösen lässt, dass man als Gel-Beschichtung eine Zusammensetzung aufbringt, die einen lichthärtbaren Anteil und einen heisshärtbaren Anteil aus einem Epoxidharz oder Phenolharz enthält.

Das verstärkte Harz ist nur heisshärtbar und vorzugsweise der gleichen Art wie der heisshärtbare Anteil der Gel-Beschichtung. Diese Gel-Beschichtung verfestigt sich rasch unter Ultraviolettbestrahlung und ist in diesem verfestigten Zustand gegen durch Berührung mit der Verstärkung verursachte Beschädigungen widerstandsfähig. Sie ist jedoch immer noch heisshärtbar. Beim Erhitzen des ganzen Aufbaus, üblicherweise unter Druck, fliesst das heisshärtbare Harz zu einem gewissen Grad vor der Härtung. Dies führt zu Vermischung des Gel-Beschichtungsharzes und des verstärkten Harzes an ihrer Grenzfläche, so dass nach beendeter Härtung eine Abtrennung der Gel-Beschichtung unmöglich ist, wenn nicht der physikalische oder mechanische Stoss so stark ist, dass das verstärkte Harz ebenfalls Schaden erleidet. Da nur eine Erhitzungsstufe nötig ist, ist das Verfahren wirtschaftlich und nicht besonders zeitraubend.

Die Verwendung der Photopolymerisation zur Härtung einer Gel-Beschichtung ist bekannt. In der deutschen Patentschrift 3 140 316 wird ein Verfahren beschrieben, bei dem eine Gel-Beschichtung durch Bestrahlung vorgehärtet und dann ein heisshärtbares Material aufgebracht und gehärtet wird. Die Beschichtung enthält vorzugsweise etwas elektrisch leitfähiges Material, und es wird angegeben, dass kein Trennmittel auf der Werkzeugoberfläche erforderlich ist. Nur ungesättigte Stoffe werden als geeignet für das Verfahren beschrieben, typischerweise Acrylate und Polyester. Die Gel-Beschichtung wird durch Bestrahlung völlig gehärtet, und das zweite Harz wird dann zusammen mit einem geeigneten Härter aufgebracht, und die Härtung verläuft bei Raumtemperatur. Dass die Gel-Beschichtung vor Aufbringung des zweiten Harzes völlig gehärtet wird, bedeutet, dass die Bindung zwischen diesen Schichten fast ausschliesslich von der Haftfestigkeit des zweiten Harzes abhängt und nicht so stark sein kann wie bei einer gewissen chemischen Wechselwirkung an der Harzgrenzfläche. Ein physikalischer oder mechanischer Stoss kann deshalb zur Abtrennung der gelierten Beschichtung führen.

Gegenstand dieser Erfindung ist deshalb ein Verfahren zur Herstellung von beschichteten, verstärkten Epoxid-oder Phenolformkörpern, welches dadurch gekennzeichnet ist, dass man

(i) eine Schicht einer einen lichthärtbaren Rest und einen Rest mit mindestens einer Epoxidgruppe oder phenolischen Hydroxylgruppe enthaltenden flüssigen Zusammensetzung auf die Oberfläche eines Werkzeugs aufbringt,

(ii) diese Schicht aktinischer Strahlung aussetzt, bis Verfestigung erfolgt und sich dadurch darauf eine verfestigte Schicht mit einem heisshärtbaren, ein Epoxid- oder Phenolharz darstellenden Rest bildet,

(iii) auf die verfestigte Schicht in beliebiger Reihenfolge oder gleichzeitig mindestens eine Verstärkungsschicht und mindestens eine Schicht aus einem ein Epoxid- oder Phenolharz darstellenden heisshärtbaren Harz aufbringt,

(iv) den Aufbau zur Bildung eines gehärteten Formkörpers erhitzt und

(v) den gehärteten Formkörper aus dem Werkzeug entnimmt.

Die zur Gel-Beschichtung verwendete Zusammensetzung kann aus einem nur lichthärtbaren Harz mit einem nur heisshärtbaren Epoxid- oder Phenolharz, einem doppeltfunktionellen Material, d.h. einem Harz, das im selben Molekül mindestens eine lichthärtbare Gruppe und mindestens eine Epoxid- oder Phenolhydroxylgruppe aufweist und in Stufe (ii) unter Bildung eines heisshärtbaren Harzes lichthärtet, einem Gemisch aus einem solchen doppeltfunktionellen Harz und einem nur lichthärtbaren Harz und/oder einem nur heisshärtbaren Epoxid- oder Phenolharz oder aus einem Epoxid-oder Phenolharz zusammen mit einem hitzeaktivierbaren Härter und einem durch aktinische Strahlung aktivierbaren Härter bestehen.

Das in Stufe (i) eingesetzte oder in Stufe (ii) durch Lichthärtung eines doppeltfunktionellen Harzes gebildete heisshärtbare Harz kann dasselbe oder verschiedener Art wie das in Stufe (iii) verwendete Harz sein. Vorzugsweise sind die Harze der gleichen Art, d.h. wenn ein Epoxidharz in Stufe (i) eingesetzt oder in Stufe (ii) durch Lichthärtung einer eine Epoxidgruppe und eine oder mehrere lichthärtbare Gruppen enthaltenden Verbindung gebildet wird, dann verwendet man ein Epoxidharz in Stufe (iii). Ähnlich verwendet man bei Einsatz eines phenolischen Resols in Stufe (i) ein phenolisches Resol in Stufe (iii).

Solche lichthärtbaren Harze werden im vorliegenden Verfahren bevorzugt eingesetzt, die mindestens eine ungesättigte Estergruppe der Formel

$$CH_2=C(R^1)COO- \qquad I$$

worin $R^1$ für ein Wasserstoff-, Chlor- oder Bromatom oder eine Alkylgruppe mit 1 bis 4 Kohlenstoffatomen, insbesondere ein Wasserstoffatom oder eine Methylgruppe, steht, enthalten.

Üblicherweise weist das lichthärtbare Harz mindestens zwei Gruppen der Formel I und ein Molekulargewicht bis höchstens 10 000 auf. Diese Gruppen können an einen aliphatischen, aromatischen, araliphatischen, cycloaliphatischen oder heterocyclischen Rest gebunden sein. Zu lichthärtbaren Harzen gehören Acrylate und Methacrylate einwertiger Alkohole, wie 2-Methoxyäthanol, Tetrahydrofurfurylalkohol und Cyclohexanol, sowie Voll- und Halbester der Acryl-und Methacrylsäure mit Glykolen wie Äthylenglykol, Propylenglykol, 1,4-Butandiol, Neopentylglykol, Diäthylen- und Dipropylenglykol, Triäthylen- und Tripropylenglykol, Tetraäthylenglykol und höhere Polyoxyalkylenglykole, und höher funktionelle Polyole wie Trimethylolpropan, Polyoxyalkylentriole und Pentaerythrit. Gegebenenfalls sind diese Acrylate und Methacrylate halogensubstituiert. Als lichthärtbares Harz eignen sich weiterhin Acrylat- und Methacrylatester substituierter einwertiger Alkohole wie 2-Cyanäthanol, 2-Chloräthanol, 2-Bromäthanol und 2-Isocyanatoäthanol.

Ferner eignen sich als lichthärtbares Harz durch Umsetzung einer eine oder mehrere Glycidylgruppen enthaltenden Verbindung, insbesondere eines Mono- oder Polyglycidyläthers eines ein- oder mehrwertigen

Alkohols oder Phenols oder N-Glycidylhydantoins, mit Acryl- oder Methacrylsäure gebildete 2-Hydroxypropylester. Weitere geeignete lichthärtbare Harze sind durch Umsetzung eines Diepoxids oder sonstigen Polyepoxids mit einer äquivalenten Menge eines Addukts eines Hydroxyalkylacrylats oder -methacrylats mit einem gesättigten oder ungesättigten Dicarbonsäureanhydrid wie Bernsteinsäure-, Maleinsäure- oder Phthalsäureanhydrid gebildete Ester. Zu typischen solchen Verbindungen gehören 1,4-Bis-(2-hydroxy-3-acryloyloxypropoxy)-butan, Poly-(2-hydroxy-3-acryloyloxypropyl)-äther eines Bisphenols oder Phenol/Formaldehydnovolaks, 2,2-Bis-(4-(2-hydroxy-3-(2-acryloyloxyäthoxy)-succinyloxypropoxy)-phenyl)-propan, 1-(2-Hydroxy-3-acryloyloxypropoxy)-butan, -octan und -decan, Bis-(2-hydroxy-3-acryloyloxypropyl)-adipat, 2-Hydroxy-3-acryloyloxypropylpropionat und 3-Phenoxy-2-hydroxypropylacrylat sowie die entsprechenden Methacrylate.

Weitere lichthärtbare, in Stufe (i) des neuen Verfahrens in Frage kommende Zusammensetzungen stellen Phenol-oder Epoxidharze zusammen mit einem durch aktinische Strahlung aktivierbaren Härter, insbesondere einem aromatischen Jodonium-, Sulfonium-, Sulfoxonium- oder Jodosylsalz oder einem Ferroceniumsalz, dafür dar. Zu geeigneten Anionen für solche Salze zählen Bor-, Arsen-, Antimon- oder Phosphorfluoride sowie bei Verwendung eines Phenolharzes ferner Halogenide, Sulfate oder Sulfonate.

Als Phenolharze, die bei der Gel-Beschichtung verwendbar sind und mit der Verstärkung den Kern des Formkörpers bilden können, eignen sich durch Umsetzung eines ein-oder mehrwertigen Phenols wie Phenol selbst, eines Kresols, Bisphenol A oder Resorcin mit einem Aldehyd wie Formaldehyd hergestellte Resole und Novolake. Sich von Phenol und Formaldehyd ableitende Resole und Novolake werden als die Phenolharze bevorzugt.

Geeignete Epoxidharze, die in der Gel-Beschichtung verwendbar sind und mit der Verstärkung einen Teil des Formkörperkerns bilden können, schliessen Polyglycidylester ein, die durch Umsetzung einer zwei oder mehr Carbonsäuregruppen pro Molekül enthaltenden Verbindung mit Epichlorhydrin oder Glycerindichlorhydrin in Gegenwart von Alkali erhältlich sind. Solche Glycidylester leiten sich vorzugsweise von aliphatischen Polycarbonsäuren, z.B. Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure. 4-Methyltetrahydrophthalsäure, Hexahydrophthalsäure und 4-Methylhexahydrophthalsäure sowie von aromatischen Polycarbonsäuren wie Phthalsäure, Isophthalsäure und Terephthalsäure ab.

Weitere geeignete Epoxidharze sind durch Umsetzung einer im Molekül zwei oder mehr freie alkoholische und/oder phenolische Hydroxylgruppen enthaltenden Verbindung mit Epichlorhydrin unter alkalischen Bedingungen oder auch in Gegenwart eines sauren Katalysators mit nachfolgender Alkalibehandlung erhältliche Polyglycidyläther. Diese Äther sind herstellbar aus acyclischen Alkoholen wie Äthylenglykol, Poly-(oxyäthylen)-glykolen, Propan-1,2-diol, Poly-(oxypropylen)-glykolen, Propan-1,3-diol, Butan-1,4-diol, Poly-(oxytetramethylen)-glykolen, Glycerin, Pentaerythrit und Poly-(epichlorhydrin). Sie sind auch aus einkernigen Phenolen wie Resorcin und mehrkernigen Phenolen wie Bis-(4-hydroxyphenyl)-methan, 4,4'-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt), 2,2-Bis-(3,5-dibrom-4-hydroxyphenyl)propan und aus Aldehyden wie Formaldehyd mit Phenolen gebildeten Novolaken herstellbar.

Weitere geeignete Epoxidharze sind Poly-(N-glycidyl)-verbindungen einschliesslich beispielsweise denen, die man durch Dehydrochlorierung der Reaktionsprodukte von Epichlorhydrin mit mindestens zwei Aminwasserstoffatomen enthaltenden Aminen, wie Anilin, n-Butylamin und Bis-(4-aminophenyl)-methan erhält, Triglycidylisocyanurat sowie N,N'-Diglycidylderivate cyclischer Alkylenharnstoffe wie Äthylenharnstoff und von Hydantoinen wie 5,5-Dimethylhydantoin.

Bei dem erfindungsgemässen Verfahren besonders bevorzugt verwendete Epoxide sind gegebenenfalls vorverlängerte Diglycidyläther zweiwertiger Phenole wie 2,2-Bis-(4-hydroxyphenyl)-propan und Bis-(4-hydroxyphenyl)-methan sowie zweiwertiger Alkohole wie Butan-1,4-diol, Polyglycidyläther von Phenol/Formaldehyd- und Bisphenol-A/Formaldehydnovolaken sowie N-glycidylierte aromatische Amine wie N,N,N',N'-Tetraglycidyl-4,4'-diaminodiphenylmethan und N,N,O-Triglycidyl-4-aminophenol.

Wie zuvor erwähnt kann die in Stufe (i) eingesetzte flüssige Zusammensetzung auch ein Harz mit mindestens einer lichthärtbaren Gruppe und mindestens einer Epoxid- oder Phenolhydroxylgruppe im selben Molekül enthalten. Solche doppeltfunktionellen Harze tragen vorzugsweise mindestens eine 1,2-Epoxidgruppe oder Phenolhydroxylgruppe und mindestens eine substituierte Estergruppe der Formel I, wobei bei solche mit ein oder zwei 1,2-Epoxidgruppen und 1 bis 6 Gruppen der Formel I besonders bevorzugt sind.

Typische solche Verbindungen entsprechen der Formel

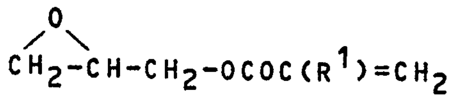

II

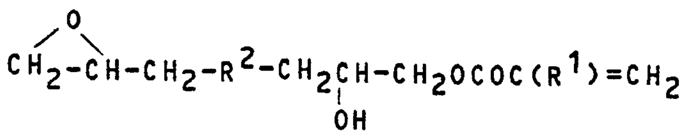

III

und

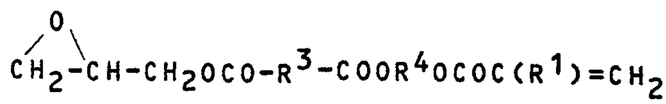

worin $R^1$ die oben angegebene Bedeutung hat und $R^2$ den Rest einer Di- oder Polyglycidylverbindung nach Wegnahme der beiden Glycidylgruppen, $R^3$ den Rest einer Di- oder Polycarbonsäure nach Wegnahme der beiden Carbonsäuregruppen und $R^4$ eine Alkylenkette mit 1 bis 6 Kohlenstoffatomen darstellen.

Zu solchen geeigneten Resten $R^2$ zählen zweiwertige Phenol-, insbesondere Bisphenolreste nach Wegnahme der beiden Phenolwasserstoffatome, Glykolreste nach Wegnahme der beiden Alkoholwasserstoffatome und aromatische Aminreste nach Wegnahme der beiden Aminwasserstoffatome. Als Reste $R^3$ eignen sich gesättigte oder ungesättigte, aliphatische oder aromatische Dicarbonsäure- und aromatische Tri- oder Tetracarbonsäurereste nach Wegnahme der beiden Carbonsäuregruppen, wie Bernsteinsäure-, Malonsäure-, Maleinsäure-, Phthalsäure-, Trimellithsäure und Pyromellithsäurereste. Als Alkylengruppen $R^4$ eignen sich Äthylen-, Propylen- und Butylengruppen.

Geeignete doppeltfunktionelle Verbindungen lassen sich dadurch herstellen, dass man eine Gruppe der Formel I in eine Verbindung, die schon eine oder mehrere 1,2-Epoxidgruppen enthält oder umgekehrt eine oder mehrere 1,2-Epoxidgruppen in eine Verbindung einführt, die schon eine oder mehrere Gruppen der Formel I enthält.

Eine bequeme Methode zur Einführung von Gruppen der Formel I in eine schon Epoxidgruppen enthaltende Verbindung zur Bildung von beispielsweise einer Verbindung der Formel III besteht darin, dass man zumindest ein Diepoxid mit einem stöchiometrischen Unterschuss bezüglich des Epoxidgruppengehalts einer Verbindung zur Reaktion bringt, die sowohl eine Gruppe der Formel I als auch eine Gruppe, wie eine Carbonsäure-, phenolische oder alkoholische Hydroxyl- oder Imidgruppe enthält, die zur Reaktion mit einer 1,2-Epoxidgruppe befähigt ist, um so mindestens eine Gruppe der Formel I in das Molekül einzuführen. Solche Polyepoxide sind dabei unter anderem geeignet, die oben als zur Verwendung als heisshärtbares Harz geeignet erwähnt wurden.

Es versteht sich, dass diese Methode gewöhnlich keine 100-%ige Ausbeute an Material ergibt, das im gleichen Molekül sowohl eine 1,2-Epoxidgruppe als auch eine Acrylatgruppe der Formel I enthält. Das übrige Material im Produkt besteht aus einem Gemisch unveränderten Ausgangsmaterials mit der ursprünglichen Anzahl Epoxidgruppen und Material, in dem sämtliche Epoxidgruppen durch Gruppen der Formel I ersetzt sind. Da sich solche Gemische jedoch erfolgreich im vorliegenden Verfahren einsetzen lassen, hat die Tatsache, dass das Reaktionsprodukt ein Gemisch darstellt, keine weiteren Folgen.

Eine weitere Methode zur Herstellung doppeltfunktioneller Verbindungen, beispielsweise denen der Formel II, durch Einführung einer oder mehrerer Epoxidgruppen in eine Verbindung mit mindestens einer Gruppe der Formel I besteht darin, dass man als letztere eine Verbindung einsetzt, die zusätzlich mindestens eine alkoholische Hydroxylgruppe oder eine Carboxylgruppe enthält, und diese so behandelt, dass die Gruppe(n) nach bekannten Methoden der Epoxidharztechnik zur Umwandlung von Hydroxyl- oder Carboxylgruppen in Glycidyläther-oder -estergruppen in 1,2-Epoxidgruppen überführt wird bzw. werden. Beispielsweise lässt man die Verbindung in Gegenwart eines chlorwasserstoffbindenden Mittels (üblicherweise einer starken Base, z.B. NaOH, und vorzugsweise eines Katalysators wie einer quartären Ammoniumverbindung, eines tertiären Amins, eines Übergangsmetallsalzes, eines Thioäthers oder eines Sulfoniumsalzes) mit Epichlorhydrin reagieren. Normalerweise setzt man dabei einen Überschuss Epichlorhydrin über die theoretisch erforderliche Menge ein, wobei der Überschuss als Lösungsmittel für die Reaktion dient, die üblicherweise bei einer Temperatur von 30° bis 120° C, vorzugsweise 40 bis 65° C, und gewöhnlich unter vermindertem Druck durchgeführt wird, um das während der Reaktion gebildete Wasser

zu entfernen.

Eine zweckmässige Methode zur Herstellung doppeltfunktioneller Verbindungen wie denen der Formel IV besteht darin, dass man eine hydroxysubstituierte, eine Gruppe der Formel I enthaltende Verbindung durch Umsetzung mit einem Polycarbonsäureanhydrid in einen Halbester überführt. Die freie(n) Carbonsäuregruppe(n) kann bzw. können dann nach der oben beschriebenen Methode glycidyliert oder durch Behandlung mit einer zwei oder mehr Epoxidgruppen enthaltenden Verbindung verestert werden, üblicherweise bei 60 bis 120 °C in Gegenwart einer starken Base und eines Katalysators wie einer quartären Ammoniumverbindung oder eines Übergangsmetallsalzes.

Sowohl einen Phenolharzrest als auch eine ungesättigte Gruppe der Formel I enthaltende Verbindungen stellt man durch Umsetzung des mehr als eine phenolische Hydroxylgruppe oder Hydroxyalkylgruppe pro Durchschnittsmolekül enthaltenden Phenolharzes mit einer eine Gruppe der Formel I enthaltenden ungesättigten Säure, vorzugsweise Acryl-oder Methacrylsäure oder deren reaktionsfähigen Derivaten, insbesondere dem Chlorid oder Glycidylester, her.

Typische doppeltfunktionelle Verbindungen sind Glycidylacrylat, Glycidylmethacrylat, 2-(4-Glycidyloxyphenyl)-2-(4-(3-acryloyloxy-2-hydroxypropoxy)-phenyl)-pröpan, 2-(4-(Glycidyloxyphenyl)-2-(4-(2-hydroxy-3-methacryloyloxy)-propoxy)-phenyl)-propan, 1-(2-Methacryloyloxyäthoxycarbonyl)-2,4-und -2,5-bis-(glycidyloxycarbonyl)-benzol, 1-(2-Acryloyloxyäthoxycarbonyl)-2,4-und -2,5-bis-(glycidyloxycarbonyl)-benzol, 2-Acryloyloxyäthoxyglycidylsuccinat, 2-Methacryloyloxyäthoxyglycidylsuccinat, 1-Glycidyl-3-(3-acryloyloxy-2-hydroxypropyl)-5,5-dimethylhydantoin, 1-Glycidyl-3-(2-hydroxy-3-methacryloyloxy)-propyl)-5,5-dimethylhydantoin, 1-Glycidyloxy-4-(3-acryloyloxy-2-hydroxy-propyloxy)-butan, 1-Glycidyloxy-4-(2-hydroxy-3-methacryl-oyloxypropyloxy)-butan und das Reaktionsprodukt eines Phenol/Formaldehydresols mit der halben stöchiometrischen Menge Acryloyl- oder Methacryloylchlorid oder Glycidylacrylat oder -methacrylat.

Eine oder mehrere Komponenten der flüssigen Zusammensetzung können fest sein, vorausgesetzt, dass das Gemisch flüssig ist. Die Viskosität der Zusammensetzung liegt vorzugsweise im Bereich 0,1 bis 50 Pa s. Um in diesen Viskositätsbereich zu gelangen, kann die Zusammensetzung ferner Monoepoxide anstelle von oder zusätzlich zu niedrigviskosen, unter den oben beschriebenen ausgewählten Acrylaten und Methacrylaten enthalten. Zu geeigneten Monoepoxiden zählen n-Butylglycidyläther, 2,2,4-Trimethylpentylglycidyläther (Isooctylglycidyläther) und Phenylglycidyläther.

Das Gewichtsverhältnis des lichthärtbaren Rests zum Epoxid- oder Phenolharzrest in der flüssigen Zusammensetzung ist nicht kritisch, solange wirksame Mengen von beiden vorhanden sind. Wo sich der Epoxid- oder Phenolharzrest und der lichthärtbare Rest auf getrennten Molekülen befinden, liegt das Gewichtsverhältnis des Epoxid- oder Phenolharzes zu lichthärtbarem Material im allgemeinen im Bereich 0,2:1 bis 15:1, vorzugsweise von 1:1 bis 10:1.

Die flüssige Zusammensetzung wird vorzugsweise in Gegenwart eines geeigneten Katalysators bestrahlt, der bei Bestrahlung einen zur Bildung freier Radikale, die dann die Polymerisation des Monomeren einleiten, führenden angeregten Zustand ergibt.

Als solche Katalysatoren eignen sich unter anderem alpha-halogensubstituierte Acetophenone wie 2,2,2-Trichlor-4'-tert.-butylacetophenon, Benzophenone, O-Alkoxycarbonylderivate eines Oxims des Benzils oder 1-Phenylpropan-1,2-dions, wie Benzil-(O-äthoxycarbonyl)-alphamonoxim und 1-Phenylpropan-1,2-dion-2-(O-äthoxycarbonyl)-oxim, Benzilketale z.B. Benzildimethylketal sowie Gemische von Phenothiazinfarbstoffen (z.B. Methylenblau) oder Chinoxalinen (z.B. Metallsalze der 2-(m- oder p-Methoxyphenyl)-chinoxalin-6'-oder -7'-sulfonsäure) mit Elektronendonatoren wie Natriumbenzolsulfinat oder einer anderen Sulfinsäure oder deren Salz, einem Arsin, Phosphin oder Thioharnstoff (Photoredoxsysteme). Ferner eignen sich Titanocene wie Bis-($\pi$ -cyclopentadienyl)-bis-( $\sigma$ -pentafluorphenyl)-titan(IV). Benzildimethylketal wird als Photoinitiator besonders bevorzugt.

Im allgemeinen werden 0,01 bis 20 und vorzugsweise 0,5 bis 15 Gew.-% Photopolymerisationskatalysator, bezogen auf das Gewicht der flüssigen Zusammensetzung, eingebaut.

Härter für das Epoxidharz oder Phenolharz sind wohlbekannt und werden je nach der Art des Harzes und den sowohl im gehärteten als auch dem ungehärteten Harz erforderlichen Eigenschaften ausgewählt. Bei Verwendung eines phenolischen Resols lässt sich die Härtung durch Erhitzen ohne zugesetzten Härter oder in Gegenwart eines sauren Härters wie Phosphorsäure, Schwefelsäure, Methansulfonsäure, p-Toluolsulfonsäure, Xylolsulfonsäure oder Salzsäure bewirken. Bei Einsatz eines Phenolnovolaks muss man einen Formaldehydspender dazugeben, vorzugsweise Hexamethylentetramin.

Zu bei dem erfindungsgemässen Verfahren verwendbaren Härtern für Epoxidharze gehören Polycarbonsäuren und deren Anhydride, insbesondere aromatische Säuren und Anhydride wie Pyromellithsäure, Pyromellithsäureanhydrid, Trimellithsäure, Trimellithsäureanhydrid und Phthalsäureanhydrid, aliphatische, cycloaliphatische und heterocyclische primäre, sekundäre oder tertiäre Amine, einschliesslich aliphatischer Polyamine wie Äthylendiamin, Hexamethylendiamin und N,N-Dimethylpropylen-1,3-diamin, Polyalkylenpolyamine wie Diäthylentriamin, Triäthylentetramin und Tetramethylenpentamin, Alkanolamine wie Äthanolamin, Diäthanolamin, Triäthanolamin und N-(2-Hydroxyäthyl)-diäthylentriamin, cycloaliphatische Polyamine wie Bis-(4-Aminocyclohexyl)-methan und Isophorondiamin, heterocyclische Polyamine wie N-(2-Aminoäthyl)-piperazin und Polyaminoamide wie die Reaktionsprodukte aliphatischer Polyamine mit dimerisierten und trimerisierten ungesättigten Fettsäuren.

Weitere Härter sind unter anderem aromatische primäre und sekundäre Amine, beispielsweise Phenylendiamine, substituierte Phenylendiamine wie 2,4- und 2,6-Diäthyl-3,5-diaminotoluol, Bis-(aminophenyl)-methane wie Bis-(4-aminophenyl)-methan, Bis-(aminophenyl)-sulfone wie Bis-(4-aminophenyl)-sulfon und Bis-(aminophenyl)-ketone wie Bis-(4-aminophenyl)-keton, Imidazol und substituierte Imidazole wie 2-Methylimidazol, 2-Phenylimidazol, 1-Benzyl-2-methylimidazol und 1-Cyanäthyl-2-methylimidazol, Amide einschliesslich substituierter Harnstoffe, insbesondere mit aromatischen Gruppen substituierte Harnstoffe wie N-(4-Chlorphenyl)-N',N'-dimethylharnstoff, N-(2-Hydroxyphenyl)-N',N'-dimethylharnstoff, N-(3-Chlor-4-methylphenyl)-N',N'-dimethylharnstoff und 2,4-Bis-(N,N-dimethylureido)-toluol, Amidine wie Dicyandiamid und 1-Cyan-3-niederalkylguanidine, beispielsweise die 3-Methyl-, 3,3-Dimethyl- oder 3,3-Diäthylverbindungen, sowie Komplexe des Bortrifluorids oder -trichlorids mit einem aliphatischen, cycloaliphatischen oder heterocyclischen Amin, insbesondere Trimethylamin oder Octyldimethylamin.

Mit den oben erwähnten Epoxidharzhärtern sind herkömmliche Beschleuniger verwendbar.

Als Verstärkung kann irgendein üblicherweise in der Herstellung verstärkter Verbundstoffe verwendetes festes Material vorliegen. Dieses kann in Pulverform, Schuppen oder vorzugsweise Faserform vorliegen. Besonders bevorzugte Fasern sind solche aus Baumwolle, Glas, Kohlenstoff, Bor, Asbest oder Metallen wie Stahl oder Aluminium. Diese Fasermaterialien können als lose Fasern oder als Gewebe oder Vliese zugesetzt und mit dem heisshärtbaren Harz vorimprägniert werden.

Die flüssige Zusammensetzung kann man nach irgendeiner bekannten Methode auf die Werkzeugoberfläche aufbringen beispielsweise durch Spritzen, Streichen oder Rollen. Die Dicke dieser Beschichtung beträgt typischerweise 1-250 Mikrometer. Wie in der Praxis der Aufbringung von Gel-Beschichtungen üblich wird die Werkzeugoberfläche vorzugsweise vor dem Harzauftrag mit einem Formtrennmittel behandelt.

Bei der Photopolymerisationsstufe des erfindungsgemässen Verfahrens wird vorzugsweise aktinische Strahlung einer Wellenlänge von 200 bis 600 nm verwendet. Zu geeigneten aktinischen Strahlungsquellen zählen Kohlelichtbögen, Quecksilberlichtbögen, Fluoreszenzlampen mit ultraviolettes Licht aussendenden Leuchtstoffen, Argon- und Xenonglimmlampen, Wolframlampen und photographische Flutlampen. Darunter sind Quecksilberdampflichtbögen, insbesondere Höhensonnen, fluoreszierende Höhensonnen und Metallhalogenidlampen am besten geeignet. Die erforderliche Belichtungszeit hängt von einer Anzahl Faktoren ab, unter anderem beispielsweise den einzelnen verwendeten Verbindungen, der Art der Lichtquelle und dem Abstand dieser Quelle von der bestrahlten Zusammensetzung. Geeignete Zeiten, die der Beschichtung genügende Härte verleihen, um Beschädigungen durch die Verstärkung beim Erhitzen unter Druck zu widerstehen, lassen sich durch den Fachmann in Photopolymerisationsmethoden leicht bestimmen.

Die Erfindung sei nun anhand der nachfolgenden Beispiele erläutert, wobei sämtliche Teile und Prozentangaben sich auf das Gewicht beziehen.

In diesen Beispielen werden die folgenden Harze verwendet:

Harz I

Dies bedeutet ein durch Vorverlängerung von Bisphenol-A-diglycidyläther durch Umsetzung mit Bisphenol-A unter Verwendung von Natriumhydroxyd als Katalysator hergestelltes Epoxidharz mit einem Epoxidgehalt von 1,4 val/kg.

Harz II

Dies bedeutet einen glycidylierten Phenol/Formaldehydnovolak mit einem Epoxidgehalt von 5,6 val/kg und einer Viskosität von 40 Pa s bei 50 °C.

Harz III

Dies bedeutet 1,4-Butandioldimethacrylat.

Harz IV

Dies bedeutet Glycidylmethacrylat.

Harz V

Dies bedeutet Bis-(4-(N,N-diglycidylamino)-phenyl)-methan mit einem Epoxidgehalt von 7,5 val/kg.

Harz VI

Dies bedeutet 2,2-Bis-(4-glycidyloxyphenyl)-propan mit einem Epoxidgehalt von 5,2 val/kg.

Harz VII

Man erhitzt ein Gemisch aus 80 % Phenol (208,3 Teile), 38,3 % Formalin (222,2 Teile) und Zinkacetat (19,4 Teile) 2 1/2 Stunden lang am Rückfluss und lässt dann abkühlen. Das Gemisch scheidet sich in zwei Schichten, und die wässrige Schicht wird abgezogen, wobei ein Phenol/Formaldehydresol mit einer Viskosität von 0,4 Pa s bei 25 °C verbleibt.

Dieses Resol (100 Teile) vermischt man mit Tetramethylammoniumchlorid (0,199 Teile) und 2,6-Ditert.-Butyl-4-methylphenol (0,266 Teile) und erhitzt auf 80 °C. Im Verlauf einer Stunde wird Glycidylmethacrylat (46,1 Teile) dazugetropft und das Gemisch dann noch 8 1/2 Stunden lang bei 80 °C weiter erhitzt. Beim Abkühlen erhält man Harz VII mit einer Viskosität von 1,44 Pa s bei 25 °C.

Harz VIII

Dies bedeutet Dibromneopentylglykoldimethacrylat, von der Shin-Nakamuro Chemical Co. Ltd., Wakayama, Japan, geliefert.

Harz IX

Dies bedeutet ein Phenol/Formaldehydresol mit den folgenden Eigenschaften: Molverhältnis Phenol:Formaldehyd = 1:1,4; spezifisches Gewicht = 1,225; Feststoffgehalt = 76%; Viskosität bei 25 °C = 0,8 Pa s.

Harz X

Dies bedeutet einen glycidylierten Bisphenol-A/Formaldehydnovolak mit einem Erweichungspunkt von 72 °C und einem Epoxidgehalt von 4,7 val/kg.

Harz XI

Dies bedeutet ein Harz, hergestellt durch Abdampfen des gesamten Wassers aus einem Phenol/Formaldehydresol mit einem Molverhältnis Phenol:Formaldehyd von 1:1,8, einer Viskosität von 6-8 Pa s bei 25 °C, einem Feststoffgehalt von 81,5-85,5 % und einem pH von 8,0-9,0.

Harz XII

Dies bedeutet 1,1,1-Trimethylolpropan-trismethacrylat.

Beispiel 1

Man erhitzt Harz I (60,8 g) und Harz II (206,6 g) zusammen auf 120 °C und versetzt die geschmolzene Masse mit Harz III (100,0 g), Harz IV (20,4 g) und Benzildimethylketal (42,5 g). Man lässt auf 60 °C abkühlen und gibt Harz V (40,5 g) dazu.

In einem getrennten Gefäss vermischt man Harz VI (36,5 g), Harz III (21,5 g), Dicyandiamid (21,9 g) und N-(4-chlorphenyl)-N',N'-dimethylharnstoff (21,9 g) und leitet das Gemisch dann durch einen Dreiwalzenstuhl. Die beiden Gemische werden vereinigt und auf ein zuvor mit einem Silicontrennmittel überzogenes Metallwerkzeug aufgestrichen, was eine 4 bis 6 Mikrometer dicke Beschichtung ergibt. Die Beschichtung wird 0,6 Sekunden unter einer 80 W/cm Mitteldruckquecksilberbogenlampe im Abstand von 90 mm belichtet. Die so erhaltene Beschichtung ist hart und klebfrei.

Auf diese Beschichtung werden zwei Schichten eines Präpregs aufgebracht, der 42 % einer Epoxidharzformulierung auf einem geschlichteten quadratischen Glasgewebe von 200 g pro Quadratmeter Gewicht enthält. Die Harzformulierung enthält Harz VI (55 Teile), mit Bisphenol-A auf einen Epoxidgehalt von 0,3 val/kg vorverlängertes Harz VI (45 Teile), Dicyandiamid (14 Teile) und N-(3-Chlor-4-methylphenyl)-N',N'-dimethylharnstoff (7 Teile). Der Aufbau wird mit einer Polytetrafluoroäthylenfolie abgedeckt, und es wird evakuiert, um die Folie auf den Schichten zu halten. Man erhitzt 1 Stunde lang im Ofen auf 130 °C und trennt vom Werkzeug, was einen gehärteten starren Formkörper ergibt, von dem die Beschichtung nicht entfernbar ist.

Beispiel 2

Man vermischt Harz VII (100 Teile), Harz VIII (10 Teile) und Benzildimethylketal (2 Teile) bei Raumtemperatur zu einer klaren Lösung. Diese wird auf eine zuvor mit einem Silicontrennmittel überzogene Oberfläche eines Metallwerkzeugs aufgestrichen, wobei eine 15-30 Mikrometer dicke Schicht verbleibt. Diese wird 2 Minuten lang der Strahlung einer 400 W Metallhalogenidlampe ausgesetzt, die hauptsächlich bei 365 nm emittiert, wobei der Abstand zwischen der Lampe und der Beschichtung 20 cm beträgt. Diese Belichtung härtet die Beschichtung.

Man legt zwei Schichten Glasfilamentgarnmatte, Vetrotex Unifilo U814, auf die gehärtete Beschichtung und schliesst das Werkzeug. (Die Worte 'Vetrotex' und 'Unifilo' sind eingetragene Warenzeichen). Ein Gemisch aus Harz IX (100 Teile), Xylolsulfonsäure (6,2 Teile), 81-%iger Phosphorsäure (1,0 Teile) und Wasser (0,8 Teile) wird in das geschlossene Werkzeug gepumpt, das dann 5 Minuten lang auf 60 °C erhitzt wird. Man öffnet das Werkzeug und entnimmt den gebildeten Formkörper. Dieser besitzt auf einer Seite eine völlig glatte und einwandfreie Beschichtung, die durch mechanischen Angriff nicht entfernbar ist.

Beispiel 3

Man erhitzt Harz I (60,75 g) und Harz X (103,28 g) zusammen auf 120 °C und versetzt die entstandene geschmolzene Masse mit Harz II (103,28 g), Harz III (100,00 g), Harz IV (20,38 g) und Benzildimethylketal (42,45 g), lässt das Gemisch auf 80 °C abkühlen und gibt Harz V (40,50 g) dazu.

In einem getrennten Gefäss vermischt man Harz VI (72,90 g), Harz III (43,00 g), Dicyandiamid (43,74 g) und N-(4-Chlorphenyl)-N',N'-dimethylharnstoff (43,74 g) und leitet das Gemisch durch einen Dreiwalzenstuhl.

Die beiden Gemische werden vereinigt und auf ein zuvor mit einem Silicontrennmittel überzogenes Metallwerkzeug aufgestrichen, was eine 30 bis 40 Mikrometer dicke Beschichtung ergibt. Diese wird 10 Sekunden lang unter einer 80 W/cm Mitteldruckquecksilberbogenlampe in 220 mm Abstand bestrahlt. Die so erhaltene Beschichtung ist hart und klebfrei. Darauf bringt man zwei Schichten eines Präpregs wie in Beispiel 1 verwendet auf, bedeckt den Aufbau mit einer Polytetrafluoräthylenfolie und evakuiert, um die Folie auf den Schichten zu halten. Der Aufbau wird im Ofen 1 Stunde lang auf 125 °C erhitzt und vom Werkzeug getrennt, was einen gehärteten starren Körper liefert, von dem die Beschichtung nicht entfernbar ist.

Beispiel 4

Man vermischt Harz XI (40,0 Teil), Harz XII (3,0 Teile), 2-Hydroxyäthylmethacrylat (1,0 Teil) und

Benzildimethylketal (0,25 Teile) bei Raumtemperatur zu einer klaren Lösung. Diese wird auf ein zuvor mit einem Silicontrennmittel überzogenes Metallwerkzeug aufgestrichen, wobei eine 20 Mikrometer dicke Beschichtung verbleibt. Diese wird 20 Sekunden lang unter einer 80 W/cm Mitteldruckquecksilberbogenlampe in 220 mm Abstand bestrahlt, um die Beschichtung zu verfestigen und klebfrei zu machen.

Eine flächenförmige Pressmasse wird dadurch hergestellt, dass man 30 Teile geschnittenen Glasspinnfaden mit 50 mm Schnittlänge der zur Bildung der Beschichtung verwendeten Lösung zusetzt, das so erhaltene Gemisch auf einen siliconisierten Pergamentpapierbogen aufbringt, was einen 20 Mikrometer dicken Film ergibt, diesen mit einem zweiten Pergamentbogen bedeckt und den ganzen Aufbau 20 Sekunden lang beidseitig mit einer 80 W/cm Mitteldruckquecksilberbogenlampe in 220 mm Abstand bestrahlt, wobei man eine faserverstärkte feste heisshärtbare Folie erhält, von der die Pergamentbögen dann entfernt werden.

Man legt drei Schichten der flächenförmigen Pressmasse auf die verfestigte Beschichtung im Werkzeug. Der dabei erhaltene Aufbau wird 30 Minuten lang auf 150 °C erhitzt und dann vom Werkzeug getrennt, wobei man einen gehärteten Formkörper mit einer glatten, nicht entfernbaren Beschichtung erhält.

## Ansprüche

1. Verfahren zur Herstellung von beschichteten, verstärkten Epoxid- oder Phenolformkörpern, dadurch gekennzeichnet, dass man
   (i) eine Schicht einer einen lichthärtbaren Rest und einen Rest mit mindestens einer Epoxidgruppe oder phenolischen Hydroxylgruppe enthaltenden flüssigen Zusammensetzung auf die Oberfläche eines Werkzeugs aufbringt,
   (ii) diese Schicht aktinischer Strahlung aussetzt, bis Verfestigung erfolgt und sich dadurch darauf eine verfestigte Schicht mit einem heisshärtbaren, ein Epoxid- oder Phenolharz darstellenden Rest bildet,
   (iii) auf die verfestigte Schicht in beliebiger Reihenfolge oder gleichzeitig mindestens eine Verstärkungsschicht und mindestens eine Schicht aus einem ein Epoxid- oder Phenolharz darstellenden heisshärtbaren Harz aufbringt,
   (iv) den Aufbau zur Bildung eines gehärteten Formkörpers erhitzt und
   (v) den gehärteten Formkörper aus dem Werkzeug entnimmt.

2. Verfahren nach Anspruch 1, dadurch gekennzeichnet, dass die Zusammensetzung aus einem nur lichthärtbaren Harz mit einem nur heisshärtbaren Epoxid- oder Phenolharz, einem doppeltfunktionellen Harz, das im selben Molekül mindestens eine lichthärtbare Gruppe und mindestens eine Epoxid-oder Phenolhydroxylgruppe aufweist und in Stufe (ii) unter Bildung eines heisshärtbaren Harzes lichthärtet, einem Gemisch aus einem solchen doppeltfunktionellen Harz und einem nur lichthärtbaren Harz und/oder einem nur heisshärtbaren Epoxid- oder Phenolharz oder aus einem Epoxid- oder Phenolharz zusammen mit einem hitzeaktivierbaren Härter und einem durch aktinische Strahlung aktivierbaren Härter besteht.

3. Verfahren nach Anspruch 1 oder 2, dadurch gekennzeichnet, dass das in Stufe (iii) eingesetzte Harz gleicher Art wie das in Stufe (i) verwendete oder in Stufe (ii) gebildete heisshärtbare Harz ist.

4. Verfahren nach einem der Ansprüche 1 bis 3, dadurch gekennzeichnet, dass das lichthärtbare Harz mindestens eine ungesättigte Estergruppe der Formel

$$CH_2{=}C(R^1)COO- \qquad I$$

   worin $R^1$ für ein Wasserstoff-, Chlor- oder Bromatom oder eine Alkylgruppe mit 1 bis 4 Kohlenstoffatomen steht, enthält.

5. Verfahren nach Anspruch 4, dadurch gekennzeichnet, dass das lichthärtbare Harz mindestens zwei Gruppen der Formel 2 und ein Molekulargewicht bis zu 10 000 aufweist.

6. Verfahren nach Anspruch 4 oder 5, dadurch gekennzeichnet, dass als lichthärtbares Harz ein Acrylat oder Methacrylat eines einwertigen Alkohols oder ein Voll- oder Halbester der Acryl- oder Methacrylsäure mit einem Glykol oder höherfunktionellen Polyol oder ein durch Umsetzung einer eine oder mehrere Glycidylgruppen enthaltenden Verbindung mit Acryl- oder Methacrylsäure gebildeter 2-Hydroxypropylester vorliegt.

7. Verfahren nach einem der vorhergehenden Ansprüche, dadurch gekennzeichnet, dass als Phenolharz ein von Phenol und Formaldehyd abgeleitetes Resol oder ein solcher Novolak bzw. als Epoxidharz ein Diglycidyläther eines zweiwertigen Phenols oder Alkohols, ein Polyglycidyläther eines Phenol/Formaldehyd- oder Bisphenol/Formaldehydnovolaks oder ein N-glycidyliertes aromatisches Amin vorliegt.

8. Verfahren nach einem der vorhergehenden Ansprüche, dadurch gekennzeichnet, dass die flüssige Zusammensetzung ein doppeltfunktionelles Harz mit mindestens einer 1,2-Epoxidgruppe oder phenolischen Hydroxylgruppe und mindestens eine substituierte Estergruppe der Formel 1 enthält.

9. Verfahren nach einem der vorhergehenden Ansprüche, dadurch gekennzeichnet, dass die flüssige Zusammensetzung ein Epoxidharz oder Phenolharz zusammen mit einem durch aktinische Strahlung aktivierbaren Härter dafür enthält.

10. Verfahren nach einem der vorhergehenden Ansprüche, dadurch gekennzeichnet, dass man die lichthärtbare Zusammensetzung in Gegenwart eines Katalysators bestrahlt, der bei Bestrahlung einen zur Bildung freier Radikale führenden angeregten Zustand ergibt.

11. Verfahren nach einem der vorhergehenden Ansprüche, dadurch gekennzeichnet, dass man ein phenolisches Resol einsetzt und die Härtung in Gegenwart eines sauren Härters bewirkt oder einen phenolischen Novolak einsetzt und die Härtung in Gegenwart eines Formaldehydspenders bewirkt.

12. Verfahren nach einem der Ansprüche 1 bis 10, dadurch gekennzeichnet, dass man ein Epoxidharz zusammen mit einem Härter dafür einsetzt, der ein aromatisches primäres oder sekundäres Amin, ein Imidazol, einen aromatisch substituierten Harnstoff, ein Amidin oder einen Bortrifluorid-oder -chloridkomplex mit einem aliphatischen, cycloaliphatischen oder heterocyclischen Amin darstellt.

13. Verfahren nach einem der vorhergehenden Ansprüche, dadurch gekennzeichnet, dass die Verstärkung in Faserform vorliegt.

14. Verfahren nach Anspruch 13, dadurch gekennzeichnet, dass die fasrige Verstärkung in Form loser Fasern oder eines Gewebes oder Vlieses, gegebenenfalls unter Vorimprägnierung mit dem heisshärtbaren Harz, vorliegt.

## Claims

1. A process for the production of a radiation-curable resin-coated, reinforced plastic moulding which comprises
   (i) applying to the surface of a mould a layer of a liquid composition containing a photocurable radical and a radical having at least one epoxide group or phenolic hydroxyl group,
   (ii) exposing this layer to actinic radiation until solidification occurs, thereby forming on said surface a solidified layer having a thermosettable radical which is an epoxide or phenolic resin,
   (iii) applying to the solidified layer, in any order or simultaneously, at least one layer of reinforcement and at least one layer of a thermosettable resin that is an epoxide or phenolic resin,
   (iv) heating the assembly to form a cured moulding and
   (v) removing the cured moulding from the mould.

2. A process according to claim 1, wherein the composition consists of a solely photocurable resin with a solely thermosettable epoxide or phenolic resin, of a dual-functional resin having, in the same molecule, at least one photocurable group and at least one epoxide or phenolic hydroxyl group, which resin photocures in stage (ii) to produce a thermosettable resin, of a mixture of a said dual-functional resin

and a solely photocurable resin and/or a solely thermosettable epoxide or phenolic resin, or of an epoxide resin or phenolic resin together with a curing agent which is activated by heat and a curing agent which is activated by actinic radiation.

3. A process according to claim 1 or 2, wherein the resin used in stage (iii) is of the same type as the thermosettable resin used in stage (i) or produced in stage (ii).

4. A process according to any of claims 1 to 3, wherein the photocurable resin contains at least one unsaturated ester group of formula

$$CH_2=C(R^1)COO- \qquad I$$

in which $R^1$ is a hydrogen, chlorine or bromine atom or an alkyl group of 1 to 4 carbon atoms.

5. A process according to claim 4, wherein the photocurable resin has at least two groups of formula I and a molecular weight of up to 10000.

6. A process according to claim 4 or 5, wherein the photocurable resin is an acrylate or methacrylate of a monohydric alcohol or a full or half ester of acrylic or methacrylic acid with a glycol or higher functional polyol, or a 2-hydroxypropyl ester formed by reaction of a compound containing one or more glycidyl groups with acrylic or methacrylic acid.

7. A process according to any one of the preceding claims, wherein the phenolic resin is a resol or novolak derived from phenol and formaldehyde, and the epoxide resin is a diglycidyl ether of a dihydric phenol or alcohol, a polyglycidyl ether of a phenol-formaldehyde novolak or a bisphenol-formaldehyde novolak, or an N-glycidylated aromatic amine.

8. A process according to any one of the preceding claims, wherein the liquid composition contains a dual-functional resin having at least one l,2-epoxide group or phenolic hydroxyl group and at least one substituted ester group of formula I.

9. A process according to any one of the preceding claims, wherein the liquid composition comprises an epoxide resin or a phenolic resin together with a curing agent therefor which is activated by actinic radiation.

10. A process according to any one of the preceding claims, wherein the photocurable composition is irradiated in the presence of a catalyst which on irradiation gives an excited state which leads to the formation of free radicals.

11. A process according to any one of the preceding claims, wherein a phenolic resol is used and cure is effected in the presence of an acidic curing agent, or a phenolic novolak is used and cure is effected in the presence of a formaldehyde donor.

12. A process according to any one of claims 1 to 10, in which an epoxide resin is used together with a curing agent therefor which is an aromatic primary or secondary amine, an imidazole, an aromatically substituted urea, an amidine or a complex of boron trifluoride or trichloride with an aliphatic, cycloaliphatic, or heterocyclic amine.

13. A process according to any one of the preceding claims, in which the reinforcement is in fibrous form.

14. A process according to claim 13, in which the fibrous reinforcement is in the form of loose fibres or a woven or non-woven fabric, optionally pre-impregnated with the thermosettable resin.

**Revendications**

1. Procédé de fabrication d'objets moulés renforcés en matière plastique, revêtus de résines durcissables

par un rayonnement, procédé caractérisé en ce que :

(1) on applique à la surface d'un moule une couche d'une composition liquide comprenant une partie photodurcissable et une partie ayant au moins un groupe époxy ou un hydroxyle phénolique,

(2) on expose cette couche à un rayonnement actinique jusqu'à ce qu'elle soit consolidée et qu'il se forme ensuite une couche consolidée avec une partie thermodurcissable qui est une résine époxydique ou phénolique,

(3) on applique sur la couche consolidée, dans un ordre quelconque ou en même temps, une ou plusieurs couches de renforcement et une ou plusieurs couches d'une résine thermodurcissable qui est une résine époxydique ou phénolique,

(4) on chauffe l'ensemble pour former un objet moulé durci, et

(5) on retire du moule l'objet moulé durci.

2. Procédé selon la revendication 1, caractérisé en ce que la composition est formée d'une résine uniquement photodurcissable avec une résine époxydique ou phénolique uniquement thermodurcissable, une résine bifonctionnelle ayant dans la même molécule au moins un groupe photodurcissable et au moins un groupe époxydique ou hydroxylique phénolique et qui durcit par irradiation dans l'étape (2) en formant une résine thermodurcissable, un mélange d'une telle résine bifonctionnelle et d'une résine uniquement photodurcissable et/ou d'une résine époxydique ou phénolique uniquement thermodurcissable ou bien d'une résine époxydique ou phénolique avec un durcisseur thermoactivable et un durcisseur activable par un rayonnement actinique.

3. Procédé selon la revendication 1 ou 2, caractérisé en ce que la résine employée dans l'étape (3) est de la même nature que celle employée dans l'étape (1) ou que la résine thermodurcissable formée dans l'étape (2).

4. Procédé selon l'une des revendications 1 à 3, caractérisé en ce que la résine photodurcissable comporte au moins un groupe ester insaturé de formule :

$$CH_2=C(R^1)COO- \qquad I$$

$R^1$ désignant un atome d'hydrogène, de chlore ou de brome ou un alkyle en $C_1$ à $C_4$.

5. Procédé selon la revendication 4, caractérisé en ce que la résine photodurcissable comporte au moins deux groupes de formule I et a une masse moléculaire pouvant s'élever jusqu'à 10000.

6. Procédé selon la revendication 4 ou 5, caractérisé en ce que la résine photodurcissable est un acrylate ou un méthacrylate d'un monoalcool ou bien un ester total ou un semi-ester de l'acide acrylique ou méthacrylique et d'un glycol ou d'un polyol à plus haute fonctionnalité ou un ester 2-hydroxypropylique formé par réaction avec l'acide acrylique ou méthacrylique d'un composé ayant un ou plusieurs groupes glycidyliques.

7. Procédé selon l'une des revendications précédentes, caractérisé en ce que la résine phénolique est un résol de phénol et de formaldéhyde ou une telle novolaque, ou bien la résine époxydique est un éther diglycidylique d'un diphénol ou d'un diol, un éther polyglycidylique d'une novolaque phénol/formaldéhyde ou bis-phénol/formaldéhyde ou une amine aromatique glycidylée sur l'azote.

8. Procédé selon l'une des revendications précédentes, caractérisé en ce que la composition liquide comprend une résine bifonctionnelle avec au moins un groupe l,2-époxy ou un hydroxyle phénolique et au moins un groupe ester substitué de formule I selon la revendication 4.

9. Procédé selon l'une des revendications précédentes, caractérisé en ce que la composition liquide comprend une résine époxydique ou phénolique avec un durcisseur activable par un rayonnement actinique.

10. Procédé selon l'une des revendications précédentes, caractérisé en ce que l'on irradie la composition photodurcissable en présence d'un catalyseur qui créé par rayonnement un état excité pour la formation de radicaux libres.

**11.** Procédé selon l'une des revendications précédentes, caractérisé en ce que l'on utilise un résol phénolique et on effectue le durcissement en présence d'un durcisseur acide, ou bien on utilise une novolaque phénolique et on effectue le durcissement en présence d'un donneur de formaldéhyde.

**12.** Procédé selon l'une des revendications 1 a 10, caractérisé en ce que l'on utilise une résine époxyde avec un durcisseur de cette résine qui est une amine aromatique primaire ou secondaire, un imidazole, une urée à substituants aromatiques, une amidine ou bien un complexe de trifluorure ou de chlorure de bore avec une amine aliphatique, cycloaliphatique ou hétérocyclique.

**13.** Procédé selon les revendications précédentes, caractérisé en ce que la matière de renforcement est sous forme de fibres.

**14.** Procédé selon la revendication 13, caractérisé en ce que la matière de renforcement fibreuse est en fibres lâches ou bien un tissu ou une nappe, éventuellement préimprégnés de la résine thermodurcissable.